# EUROPÄISCHE PATENTANMELDUNG

(11) **EP 4 559 739 A1**
(43) Veröffentlichungstag der Anmeldung: **28.05.2025**
(21) Anmeldenummer: 23212343.0
(22) Anmeldetag: 27.11.2023
(51) Int. Cl.: B60N 2/02, B60N 2/06

(54) **LÄNGSVERSTELLEINRICHTUNG UND FAHRZEUGSITZ**

(71) Anmelder: Adient US LLC, Plymouth, MI 48170 (US)
(72) Erfinder: SPRENGER, Erik, 42929 Wermelskirchen (DE); ZALAVARI, Kornel, 42659 Solingen (DE); QUAST, Ingo, 40477 Duesseldorf (DE); MAYER, Thomas, 42477 Radevormwald (DE)
(74) Vertreter: Liedtke & Partner Patentanwälte

(57) **Zusammenfassung**

Die Erfindung betrifft eine Längsverstelleinrichtung (110) für einen Fahrzeugsitz (100), umfassend zumindest eine Schienenanordnung (112) mit einer festen Unterschiene (116) und einer zur Unterschiene (116) verstellbaren Oberschiene (114) sowie mindestens ein durch eine Antriebseinrichtung (218) antreibbares Antriebsrad (200), das eingerichtet ist, auf einer dem Antriebsrad (200) zugewandten Kontaktfläche (118) der Unterschiene (116) abzurollen und die Oberschiene (114) relativ zu der Unterschiene (116) zu verstellen, wobei
- das Antriebsrad (200) zwischen einer Ruheposition (210) und einer Arbeitsposition (212) hin und her bewegbar ist,
- das Antriebsrad (200) in der Ruheposition (210) berührungsfrei oberhalb der Kontaktfläche (118) der Unterschiene (116) angeordnet ist und durch ein elastisches Element (400) in der Ruheposition (210) gehalten ist, und
- das Antriebsrad (200) in der Arbeitsposition (212) die Kontaktfläche (118) der Unterschiene (116) berührend auf der Unterschiene (116) angeordnet ist, wobei durch das elastische Element (400) auf das Antriebsrad (200) eine abwärts gerichtete Andruckkraft (216) ausübbar ist oder ausgeübt wird.

Die Erfindung betrifft außerdem einen Fahrzeugsitz (100) mit einer solchen Längsverstelleinrichtung (110).

## Beschreibung

Die Erfindung betrifft eine Längsverstelleinrichtung mit einem beweglichen Schienenelement für einen Sitz, insbesondere einen Fahrzeugsitz, sowie einen Fahrzeugsitz.

### Stand der Technik

Eine Längsverstelleinrichtung umfasst im Allgemeinen zwei im Abstand voneinander angeordnete Schienenpaare, die jeweils aus zwei Schienen, einer dem Sitz zugeordneten Oberschiene und einer dem Boden eines Fahrzeuges zugeordneten Unterschiene, aufgebaut sind. Die Längsverstelleinrichtung umfasst darüber hinaus wenigstens ein federbelastetes, bewegbares Verriegelungsteil, das an der Oberschiene gehaltert ist und in einer Verriegelungsstellung eine Bewegung der Oberschiene in der Unterschiene sperrt. Dabei kann die Unterschiene Durchbrüche aufweisen, während die Oberschiene mit Öffnungen versehen ist und das Verriegelungsteil an seinen beiden gegenüberliegenden Längsseiten Vorsprünge trägt, die in der Verriegelungsstellung durch eine Feder sowohl in die Öffnungen, als auch in die Durchbrüche bewegbar sind. Eine derartige Längsverstelleinrichtung ist beispielsweise aus dem Europäischen Patent EP 1 227 950 B1 bekannt.

### Aufgabe

Der Erfindung liegt die Aufgabe zu Grunde, eine Längsverstelleinrichtung hinsichtlich Verstellbarkeit und Zuverlässigkeit zu verbessern sowie einen entsprechenden Fahrzeugsitz bereitzustellen.

### Lösung

Die erstgenannte Aufgabe wird erfindungsgemäß gelöst durch eine Längsverstelleinrichtung mit den Merkmalen des Anspruchs 1. Die zweitgenannte Aufgabe wird erfindungsgemäß gelöst durch einen Fahrzeugsitz mit den Merkmalen des Anspruchs 8.

Vorteilhafte Ausgestaltungen, welche einzeln oder in Kombination miteinander eingesetzt werden können, sind Gegenstand der Unteransprüche.

Die erfindungsgemäße Längsverstelleinrichtung umfasst zumindest ein Schienenpaar mit einer festen Unterschiene und einer relativ zur festen Unterschiene verstellbaren Oberschiene sowie mindestens ein durch eine Antriebseinrichtung antreibbares Antriebsrad, das eingerichtet ist, auf einer dem Antriebsrad zugewandten Kontaktfläche der Unterschiene abzurollen und die Oberschiene relativ zu der Unterschiene zu verstellen, wobei das Antriebsrad zwischen einer Ruheposition, die auch als angehobene Position bezeichnet werden kann, und einer Arbeitsposition, die auch als abgesenkte Position bezeichnet werden kann, hin und her bewegbar ist. Beispielsweise kann vorgesehen sein, dass das Antriebsrad in der Ruheposition oder angehobenen Position berührungsfrei oberhalb der Kontaktfläche der Unterschiene angeordnet ist. Dabei kann weiterhin vorgesehen sein, dass das Antriebsrad durch ein elastisches Element in der Ruheposition oder angehobenen Position gehalten ist. Außerdem kann vorgesehen sein, dass das Antriebsrad in der Arbeitsposition oder abgesenkten Position die Kontaktfläche der Unterschiene berührend auf der Unterschiene angeordnet ist, wobei durch das elastische Element auf das Antriebsrad eine abwärts gerichtete Andruckkraft ausübbar ist oder ausgeübt wird.

Dadurch, dass das elastische Element sowohl in der Ruheposition als auch in der Arbeitsposition auf das Antriebsrad wirkt, kann mit nur einem einzigen und zudem technisch sehr einfachen Bauteil erreicht werden, dass das Antriebsrad einerseits gegen sein Eigengewicht in der Ruheposition gehalten wird, und andererseits das Antriebsrad in der Arbeitsposition auf die Kontaktfläche der Unterschiene gedrückt wird, so dass die Reibung zwischen dem Antriebsrad und der Kontaktfläche erhöht wird, damit die Längsverstellung des Fahrzeugsitzes insbesondere auch dann zuverlässig funktioniert, wenn die Kontaktfläche beispielsweise feucht oder anderweitig verunreinigt ist.

Beispielsweise kann das Antriebsrad in einer Halteeinrichtung gehalten und beispielsweise in der Halteeinrichtung drehbar gelagert sein, und die Halteeinrichtung kann beispielsweise mit der Oberschiene direkt oder über andere Komponenten, beispielsweise eine an der Oberschiene befestigte Steuereinrichtung, so angebracht sein, dass sie aufgrund ihrer Verbindung zur Oberschiene, wenn sich das Antriebsrad in der Arbeitsposition befindet und angetrieben wird, eine Längsverstellung der Oberschiene relativ zur Unterschiene in der Längsrichtung bewirkt. Beispielsweise kann das Antriebsrad zwischen der Ruheposition und der Arbeitsposition durch eine Steuereinrichtung hin und her bewegbar sein. Die Steuereinrichtung kann beispielsweise zwei drehbar antreibbare, miteinander bewegungsgekoppelte Steuerelemente umfassen, welche beispielsweise eingerichtet sein können, auf die Halteeinrichtung und damit auf das darin gehaltene Antriebsrad anhebend oder absenkend einzuwirken. Die Steuerelemente können dabei auf je einer Drehachse drehbar gelagert sein, und die Drehachsen der beiden Steuerelemente können weiter vorteilhaft parallel zueinander und auf gleicher Höhe, das heißt mit gleich großem vertikalem Abstand zu der Kontaktfläche der Unterschiene angeordnet sein.

Die Halteeinrichtung kann beispielsweise zwei Anschlagelemente aufweisen, die je einem Anschlagelement zugeordnet sind. Die Steuerelemente können miteinander bewegungsgekoppelt sein, beispielsweise indem beide Steuerelemente eine Verzahnung aufweisen und die beiden Verzahnungen ineinandergreifen, so dass bei Drehung eines ersten der beiden Steuerelemente das zweite Steuerelement zwangsweise ebenfalls gedreht wird, jedoch mit entgegengesetztem Drehsinn wie das erste Steuerelement. Weiterhin können die Steuerelemente jeweils eine auf die Halteeinrichtung einwirkende Steuerkontur aufweisen. Dabei kann beispielsweise vorgesehen sein, dass die Halteeinrichtung Anschlagelemente aufweist und die Steuerkonturen der Steuerelemente auf die Anschlagelemente einwirken. Das Einwirken der Steuerkonturen der Steuerelemente auf die Anschlagelemente der Halteeinrichtung kann dabei beispielsweise ein Absenken der Halteeinrichtung und damit des Antriebsrads oder/und ein Anheben der Halteeinrichtung und damit des Antriebsrads bewirken.

Bei der vorgeschlagenen Längsverstelleinrichtung kann weiterhin beispielsweise vorgesehen sein, dass die Steuerelemente jeweils ein exzentrisch angeordnetes Krafteinleitungselement aufweisen. Das elastische Element kann beispielsweise so angeordnet sein, dass es auf die Krafteinleitungselemente einwirkt. Die Einwirkung des elastischen Elements kann beispielsweise dergestalt sein, dass das elastische Element eine horizontale Kraft auf die Steuerelemente ausübt. Anders ausgedrückt übt das elastische Element auf beide Steuerelemente eine jeweils gleich große, aber entgegengesetzt gerichtete, horizontale Kraft aus, denn die auf ein Steuerelement wirkende Kraft ist gleich der Reaktionskraft, die das andere Steuerelement zur Abstützung des elastischen Elements aufbringen muss.

Indem das elastische Element eine horizontale Kraft auf jedes der beiden Steuerelemente ausübt, und zwar indem die Krafteinleitung über die beiden Krafteinleitungselemente erfolgt, die exzentrisch, das heißt außerhalb der Drehachsen der beiden Steuerelemente angeordnet sind, erzeugt diese horizontale Kraft auf jedes Steuerelement ein Drehmoment um die jeweilige Drehachse, und zwar in jeder Stellung der beiden Steuerelemente, außer der einen, singulären Stellung, in der die beiden Steuerelemente so angeordnet sind, dass die beiden Krafteinleitungselemente auf exakt demselben Höhenniveau wie die beiden Drehachsen der Steuerelemente stehen. Diese singuläre Stellung kann in zwei verschiedenen Ausgestaltungen vorkommen:
Befinden sich die beiden Krafteinleitungselemente der Steuerelemente innerhalb des horizontalen Abstands zwischen den Drehachsen der beiden Steuerelemente, wenn sie auf demselben Höhenniveau wie die beiden Drehachsen der Steuerelemente stehen, so muss das elastische Element wie eine Druckfeder wirken, das heißt auf die beiden Krafteinleitungselemente auswärts einwirken. Befinden sich die beiden Krafteinleitungselemente der Steuerelemente jedoch außerhalb des horizontalen Abstands zwischen den Drehachsen der beiden Steuerelemente, wenn sie auf demselben Höhenniveau wie die beiden Drehachsen der Steuerelemente stehen, so muss das elastische Element wie eine Zugfeder wirken, das heißt die beiden Krafteinleitungselemente einwärts wirken. Beide Ausgestaltungen sind möglich.

Um die Anordnung und Befestigung des elastischen Elements hinsichtlich der Krafteinleitungselemente der Steuerelemente zu vereinfachen, kann beispielsweise vorgesehen sein, dass das elastische Element im montierten Zustand permanent vorgespannt ist. Muss das elastische Element, wie soeben beschrieben, wie eine Druckfeder wirken, dann ist das elastische Element durch die Vorspannung bestrebt, die Krafteinleitungselemente der Steuerelemente voneinander weg zu drücken. Muss das elastische Element hingegen wie eine Zugfeder wirken, dann ist das elastische Element durch die Vorspannung bestrebt, die Krafteinleitungselemente der Steuerelemente aufeinander zuzuziehen.

Sobald die Krafteinleitungselemente sich nicht auf einer gedachten Verbindungsgeraden der Drehachsen der Steuerelemente, sondern darüber oder darunter befinden, bewirkt die von dem elastischen Element bewirkte Horizontalkraft, die auf die Krafteinleitungselemente der beiden Steuerelemente wirkt, ein resultierendes Drehmoment um die jeweilige Drehachse. Befinden sich die Krafteinleitungselemente der Steuerelemente oberhalb der gedachten Verbindungsgeraden der Drehachsen der Steuerelemente, werden durch dieses Drehmoment die beiden Steuerelemente - durch die Bewegungskopplung zwischen ihnen synchron - so bewegt, dass die Halteeinrichtung sowie das Antriebsrad in die Ruheposition bewegt und dort gehalten werden. Befinden sich hingegen die Krafteinleitungselemente der Steuerelemente unterhalb der gedachten Verbindungsgeraden der Drehachsen der Steuerelemente, werden durch dieses Drehmoment die beiden Steuerelemente - durch die Bewegungskopplung zwischen ihnen synchron - so bewegt, dass die Halteeinrichtung sowie das Antriebsrad in die Arbeitsposition bewegt werden und das Antriebsrad eine vertikale Andruckkraft auf die Kontaktfläche der Unterschiene ausübt.

Das elastische Element kann beispielsweise als eine Schraubenfeder, Schenkelfeder oder Blattfeder ausgebildet sein. Dies sind jedoch lediglich beispielhafte Ausgestaltungen, viele andere Ausgestaltungen des elastischen Elements, die im Griffbereich des Fachmanns liegen, können ebenso gut und mit demselben Ergebnis verwendet werden.

Die Aufgabe wird erfindungsgemäß zudem gelöst durch einen Fahrzeugsitz mit den Merkmalen des Anspruchs 8.

Zusammenfassend und mit anderen Worten ausgedrückt ist durch die Erfindung eine Längsverstelleinrichtung für einen Fahrzeugsitz bereitgestellt, bei der vor einer Inbetriebnahme der Sitzverstellung ein Reibrad auf die Schiene abgesenkt wird, um einen reibschlüssigen Antrieb zwischen Reibrad und Schiene zu gewährleisten. Vor dem Absenken des Reibrades hält eine Feder das Reibrad oberhalb der Schiene in einer Parkposition. Die Feder hat in diesem Zustand die Aufgabe das Eigengewicht des Reibradantriebs zu kompensieren. Bei abgesenktem Reibradantrieb soll die Feder dem Reibrad eine Anpressung ermöglichen, um den Kontakt zwischen Schiene und Reibrad zu gewährleisten. Die Feder wirkt in der Parkposition einmal oberhalb des Drehpunktes am Exzenter und weil beim Absenken die Feder unterhalb des Exzenterdrehpunktes wirkt, wirkt die Feder einmal anhebend und einmal absenkend auf den Reibradantrieb. Die Blattfeder hat im Wesentlichen 3 unterschiedliche Arbeitsbereiche:
1. Parkposition der Blattfeder.
2. Übergangsbereich der Blattfeder, Erzeugung eines Drehmomentes aus dem Koeffizienten in Folge einer vertikalen Abstützkraft und einer horizontalen Abstützkraft. Hieraus resultiert ein Summenmoment um die Drehachse des Exzenters.
3. Zunehmende Erhöhung vom Verhältnis vertikaler zu horizontaler Kraftkomponente zur Erzeugung des Summenmomentes am Exzenter.

Die Blattfeder kann ferner ausgestanzte Einhängepunkte aufweisen, welche eine sichere Positionierung und ein axiales Herausrutschen gewährleisten. Diese Einhängepunkte dienen der Befestigung der Blattfeder. Auch kann die Blattfeder hierdurch Ihre maximal mögliche vertikale Absenkung nicht überschreiten.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung nach dem Stand der Technik,
- Fig. 2:: eine perspektivische Ansicht einer erfindungsgemäßen Längsverstelleinrichtung gemäß eines ersten Ausführungsbeispiels,
- Fig. 3:: eine Seitenansicht einer erfindungsgemäßen Längsverstelleinrichtung gemäß eines zweiten Ausführungsbeispiels in einer Ruheposition,
- Fig. 4:: eine Seitenansicht der Längsverstelleinrichtung gemäß des zweiten Ausführungsbeispiels in einer Arbeitsposition,
- Fig. 5:: eine Seitenansicht einer Steuereinrichtung der Längsverstelleinrichtung gemäß des zweiten Ausführungsbeispiels in einer Ruheposition,
- Fig. 6:: eine Seitenansicht der Steuereinrichtung der Längsverstelleinrichtung gemäß des zweiten Ausführungsbeispiels in einer Zwischenposition,
- Fig. 7:: eine Seitenansicht der Steuereinrichtung der Längsverstelleinrichtung gemäß des zweiten Ausführungsbeispiels in einer Arbeitsposition,
- Fig. 8:: eine perspektivische Ansicht eines elastischen Elements der Steuereinrichtung der Längsverstelleinrichtung gemäß des zweiten Ausführungsbeispiels, und
- Fig. 9:: eine perspektivische Ansicht der Steuereinrichtung der Längsverstelleinrichtung gemäß des zweiten Ausführungsbeispiels.

Einander entsprechende Teile sind in allen Figuren mit den gleichen Bezugszeichen versehen.

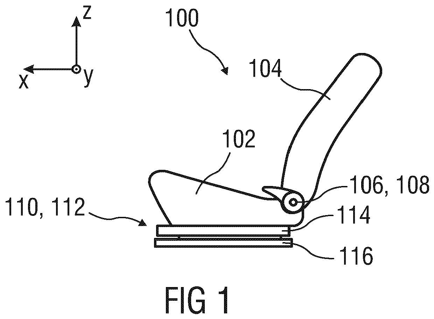

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden, nicht näher dargestellten Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

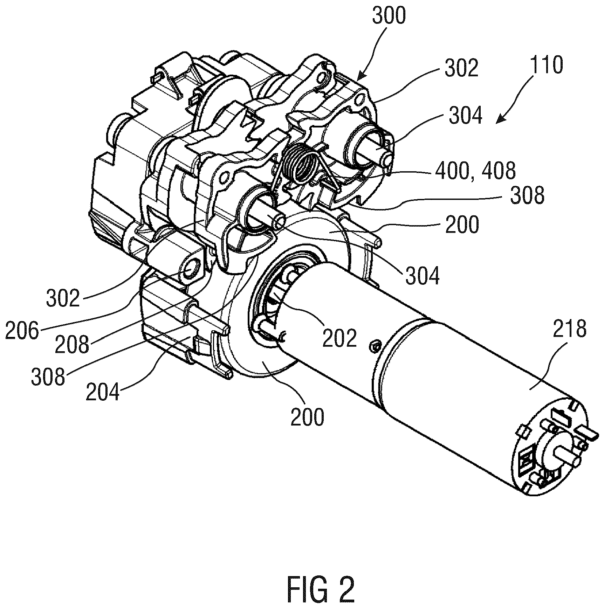

Fig. 2 zeigt eine perspektivische Ansicht einer erfindungsgemäßen Längsverstelleinrichtung 110 gemäß eines ersten Ausführungsbeispiels, bei dem ein Antriebsrad 200 mit einer Antriebseinrichtung 218 über eine Drehachse 202 wirkverbunden ist, so dass das Antriebsrad 200 durch die Antriebseinrichtung 218 antreibbar ist. Das Antriebsrad 200 ist in einer Halteeinrichtung 204 gehalten, die mit einer Steuereinrichtung 300 wirkverbunden ist, wobei die Steuereinrichtung 300 dazu ausgebildet und dafür eingerichtet ist, das Antriebsrad 200 anzuheben oder abzusenken. Dafür weist die Steuereinrichtung 300 Halteelemente 206 auf, um die Steuereinrichtung 300 an einer (hier nicht gezeigten) Oberschiene 114 eines (hier nicht gezeigten) Fahrzeugsitzes 100 in der Längsrichtung x zu verstellen.

Die Steuereinrichtung 300 weist zwei Steuerelemente 302 auf, die auf je einer Drehachse 304 drehbar gelagert sind und die über eine Verzahnung 306 miteinander bewegungsgekoppelt sind, das heißt wenn sich eines der beiden Steuerelemente 302 um seine Drehachse 304 dreht, so wird das andere Steuerelement 302 zwangsweise ebenfalls um seine Drehachse 304 gedreht, jedoch mit entgegengesetztem Drehsinn wie das erste Steuerelement 302. Die Steuerelemente 302 weisen jeweils eine Steuerkontur 308 auf. Die Halteeinrichtung 204, die relativ zur Steuereinrichtung 300 aufwärts und abwärts bewegbar mit der Steuereinrichtung 300 verbunden ist, weist außerdem zwei Anschlagelemente 208 auf. Werden die Steuerelemente 302 um ihre jeweiligen Drehachsen 304 gedreht, so gelangen die Steuerkonturen 308 in Berührung mit den Anschlagelementen 208. Werden die Steuerelemente 302 anschließend weitergedreht, so wirken die Steuerkonturen 308 auf die Anschlagelemente 208 ein und verdrängen diese abwärts, wodurch die Halteeinrichtung 204 und mit der Halteeinrichtung 204 das Antriebsrad 200 abgesenkt wird.

Zwischen den beiden Steuerelementen 302 ist ein elastisches Element 400 angeordnet, das hier als Schenkelfeder 408 ausgebildet ist, deren Schenkel mit je einem Steuerelement 302 exzentrisch verbunden sind, so dass das elastische Element 400 auf beide Steuerelemente 302 eine (hier nicht gezeigte) auswärts wirkende Horizontalkraft 406 ausübt, die an den Steuerelementen 302 jeweils ein (hier nicht gezeigtes) resultierendes Drehmoment 314 erzeugt. Was die auftretenden Kräfte und Momente bewirken, wird nachfolgend anhand eines zweiten Ausführungsbeispiels näher erläutert:

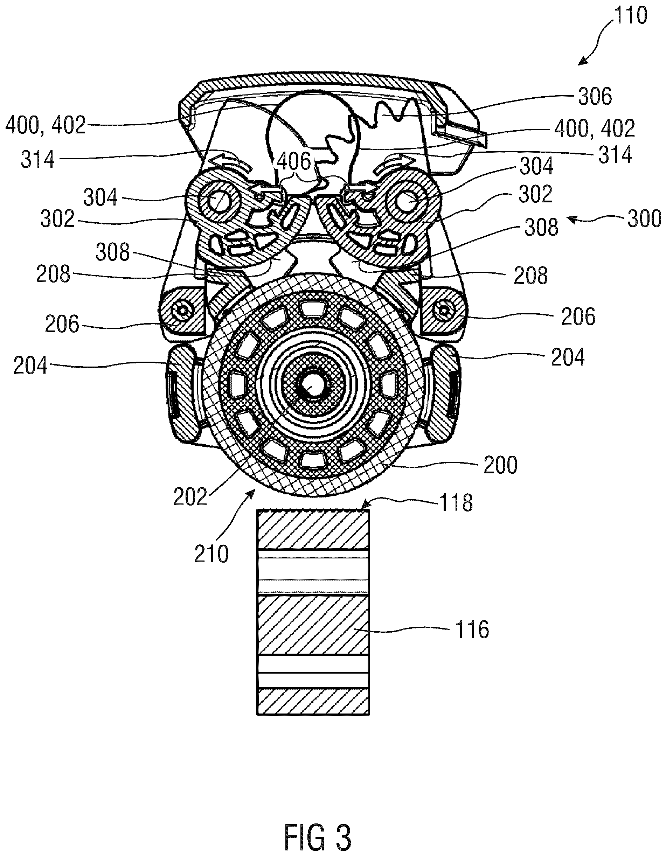

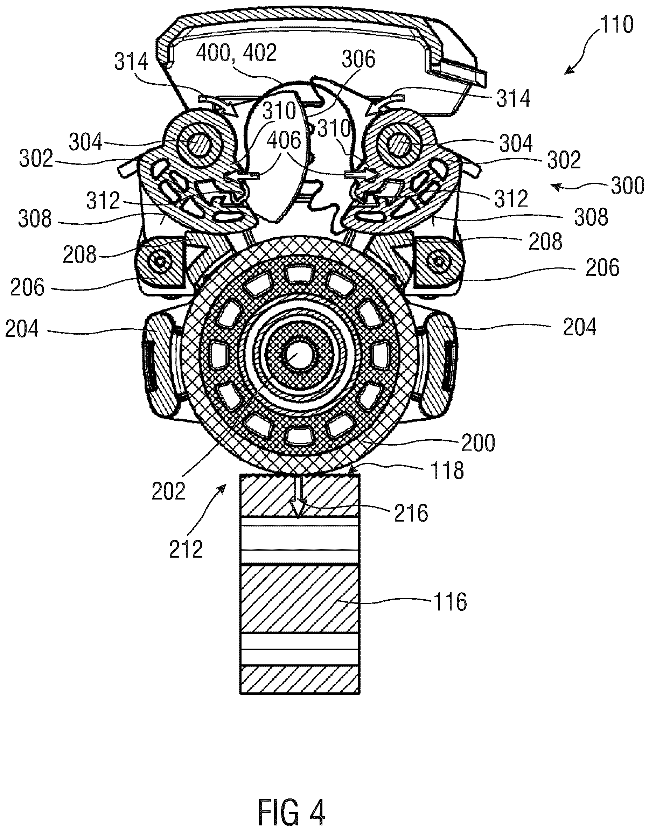

Fig. 3 zeigt eine Seitenansicht einer erfindungsgemäßen Längsverstelleinrichtung 110 gemäß eines zweiten Ausführungsbeispiels in einer Ruheposition 210, bei der das Antriebsrad 200 oberhalb der Unterschiene 116 berührungsfrei oberhalb der Kontaktfläche 118 der Unterschiene 116 gehalten ist und Fig. 4 zeigt die gleiche Seitenansicht, aber das Antriebsrad 200 steht in einer Arbeitsposition 212 auf der Unterschiene 116 und wird mit einer Andruckkraft 216 auf die Unterschiene 116 gedrückt.

Das Antriebsrad 200 ist in einer Halteeinrichtung 204 gehalten, die mit einer Steuereinrichtung 300 wirkverbunden ist, wobei die Steuereinrichtung 300 dazu ausgebildet und dafür eingerichtet ist, das Antriebsrad 200 anzuheben oder abzusenken. Dafür weist die Steuereinrichtung 300 Halteelemente 206 auf, um die Steuereinrichtung 300 an einer (hier nicht gezeigten) Oberschiene 114 eines (hier nicht gezeigten) Fahrzeugsitzes 100 in der Längsrichtung x zu verstellen.

Die Steuereinrichtung 300 weist zwei Steuerelemente 302 auf, die auf je einer Drehachse 304 drehbar gelagert sind und die über eine Verzahnung 306 miteinander bewegungsgekoppelt sind, das heißt wenn sich eines der beiden Steuerelemente 302 um seine Drehachse 304 dreht, so wird das andere Steuerelement 302 zwangsweise ebenfalls um seine Drehachse 304 gedreht, jedoch mit entgegengesetztem Drehsinn wie das erste Steuerelement 302. Die Steuerelemente 302 weisen jeweils eine Steuerkontur 308 auf. Die Halteeinrichtung 204, die relativ zur Steuereinrichtung 300 aufwärts und abwärts bewegbar mit der Steuereinrichtung 300 verbunden ist, weist außerdem zwei Anschlagelemente 208 auf. Werden die Steuerelemente 302 um ihre jeweiligen Drehachsen 304 gedreht, so gelangen die Steuerkonturen 308 in Berührung mit den Anschlagelementen 208. Werden die Steuerelemente 302 anschließend weitergedreht, so wirken die Steuerkonturen 308 auf die Anschlagelemente 208 ein und verdrängen diese abwärts, wodurch die Halteeinrichtung 204 und mit der Halteeinrichtung 204 das Antriebsrad 200 abgesenkt wird.

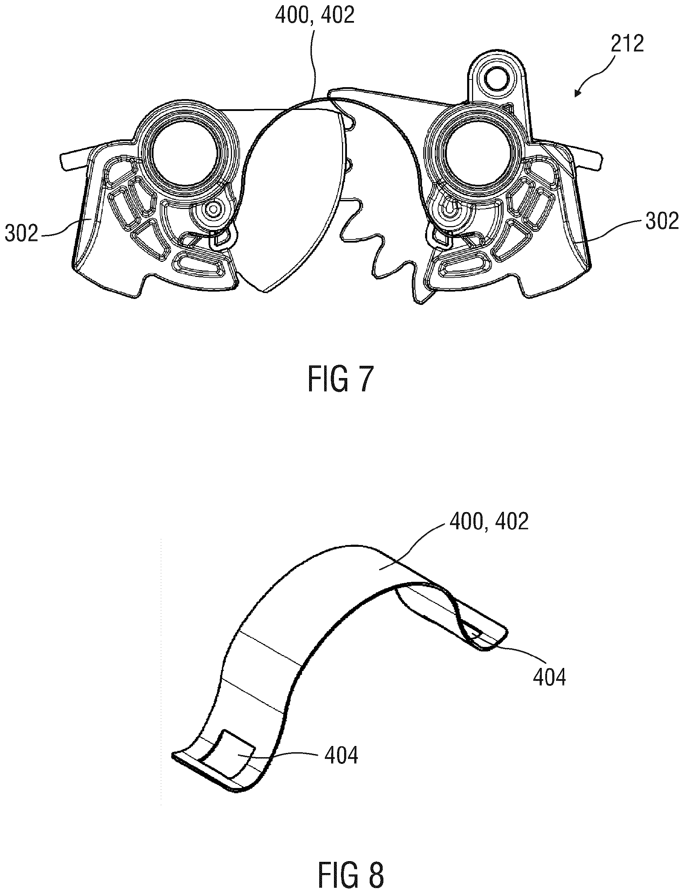

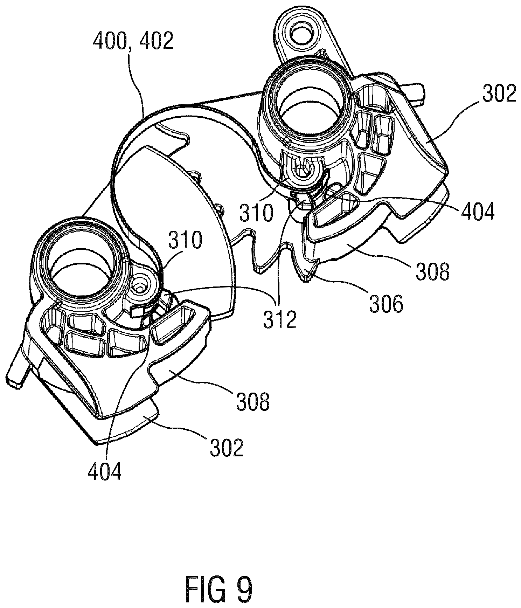

Zwischen den beiden Steuerelementen 302 ist ein elastisches Element 400 angeordnet, das hier als Blattfeder 402 ausgebildet ist, deren Schenkel mit je einem Krafteinleitungselement 310 der Steuerelemente 302 verbunden sind. Dazu weist die Blattfeder 402, die eine U-förmige Grundform hat, und die in Fig. 8 separat dargestellt ist, an jedem ihrer beiden Enden eine Halteöffnung 404 auf. Wie besonders in Fig. 9 gut zu erkennen ist, ist an den Krafteinleitungselementen 310 der Steuerelemente 302 jeweils ein Haltenocken 312 angeordnet, der in eine der beiden Halteöffnungen 404 der Blattfeder 402 eingreift und damit die Blattfeder 402 in ihrer Position hält. Ebenfalls gut zu erkennen ist in Fig. 9 die Lage der Steuerkonturen 308 der Steuerelemente 302.

Die Krafteinleitungselemente 310 sind relativ zu den Drehachsen 304 der Steuerelemente 302 exzentrisch angeordnet, so dass das elastische Element 400 auf beide Steuerelemente 302 eine auswärts wirkende Horizontalkraft 406 ausübt, die an den Steuerelementen 302 jeweils ein resultierendes Drehmoment 314 erzeugt, wie in Fig. 3 und 4 gut erkennbar ist.

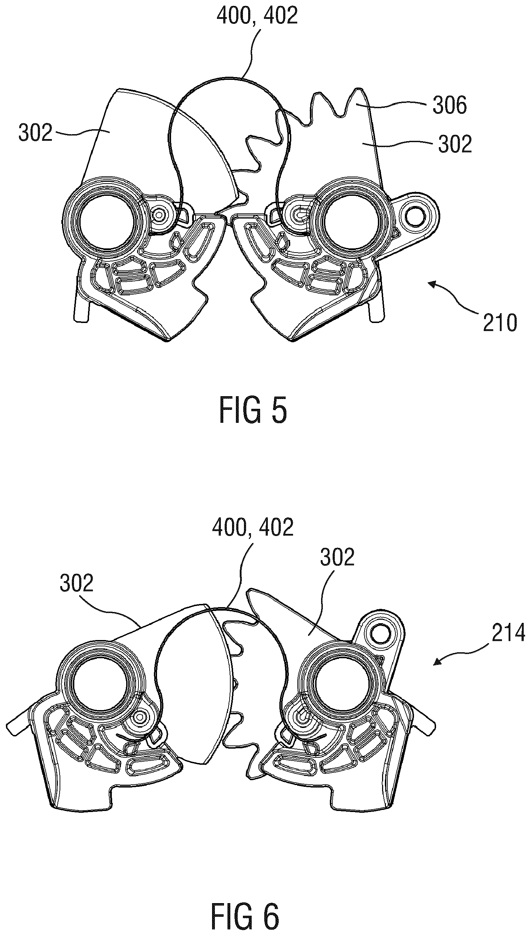

In der Darstellung der Fig. 3 und 5 befindet sich das Antriebsrad 200 in einer angehobenen Position oberhalb der Unterschiene 116, das heißt in einer Ruheposition 210. Die Krafteinleitungselemente 310 der Steuerelemente 302 befinden sich in der Ruheposition 210 oberhalb der Drehachsen 304 der Steuerelemente 302. Zerlegt man die von dem elastischen Element 400 auf die Steuerelemente 302 wirkende Horizontalkraft 406 gedanklich in - bezogen auf die jeweilige Drehachse 304 der beiden Steuerelemente 302 - eine radiale und eine tangentiale Kraftkomponente, so erkennt man, dass die tangentiale Kraftkomponente an jedem Steuerelement 302 ein Drehmoment 314 erzeugt, das einem durch die Gewichtskraft des Antriebsrads 200 erzeugten Drehmoment 314 entgegenwirkt und das groß genug ist, um das durch die Gewichtskraft des Antriebsrads 200 erzeugte Drehmoment 314 aufzuheben, so dass das Antriebsrad 200 in der Ruheposition 210 gehalten wird.

In der Darstellung der Fig. 6 befindet sich das Antriebsrad 200 in einer abgesenkten Position, das heißt in einer Zwischenposition 214.

In der Darstellung der Fig. 4 und 7 befindet sich das Antriebsrad 200 in einer abgesenkten Position auf der Unterschiene 116, das heißt in einer Arbeitsposition 212. Die Krafteinleitungselemente 310 der Steuerelemente 302 befinden sich in der Arbeitsposition 212 unterhalb der Drehachsen 304 der Steuerelemente 302. Zerlegt man die von dem elastischen Element 400 auf die Steuerelemente 302 wirkende Horizontalkraft 406 gedanklich in - bezogen auf die jeweilige Drehachse 304 der beiden Steuerelemente 302 - eine radiale und eine tangentiale Kraftkomponente, so erkennt man, dass die tangentiale Kraftkomponente an jedem Steuerelement 302 ein Drehmoment 314 erzeugt, das sich mit einem durch die Gewichtskraft des Antriebsrads 200 erzeugten Drehmoment 314 addiert und das dadurch auf die Kontaktfläche 118 der Unterschiene 116 eine zusätzliche vertikale Andruckkraft 216 erzeugt.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: Erstes Schienenelement (Oberschiene)
- 116: Zweites Schienenelement (Unterschiene)
- 118: Kontaktfläche

- 200: Antriebsrad
- 202: Drehachse
- 204: Halteeinrichtung
- 206: Halteelement
- 208: Anschlagelement
- 210: Ruheposition
- 212: Arbeitsposition
- 214: Zwischenposition
- 216: Andruckkraft
- 218: Antriebseinrichtung

- 300: Steuereinrichtung
- 302: Steuerelement
- 304: Drehachse
- 306: Verzahnung
- 308: Steuerkontur
- 310: Krafteinleitungselement
- 312: Haltenocken
- 314: Drehmoment
- 400: elastisches Element
- 402: Blattfeder
- 404: Halteöffnung
- 406: Horizontalkraft
- 408: Schenkelfeder

- x: Längsrichtung
- y: Querrichtung
- z: Vertikalrichtung

## Patentansprüche

1. Längsverstelleinrichtung (110) für einen Fahrzeugsitz (100), umfassend zumindest eine Schienenanordnung (112) mit einer festen Unterschiene (116) und einer zur Unterschiene (116) verstellbaren Oberschiene (114) sowie mindestens ein durch eine Antriebseinrichtung (218) antreibbares Antriebsrad (200), das eingerichtet ist, auf einer dem Antriebsrad (200) zugewandten Kontaktfläche (118) der Unterschiene (116) abzurollen und die Oberschiene (114) relativ zu der Unterschiene (116) zu verstellen, wobei
- das Antriebsrad (200) zwischen einer Ruheposition (210) und einer Arbeitsposition (212) hin und her bewegbar ist,
- das Antriebsrad (200) in der Ruheposition (210) berührungsfrei oberhalb der Kontaktfläche (118) der Unterschiene (116) angeordnet ist und durch ein elastisches Element (400) in der Ruheposition (210) gehalten ist, und
- das Antriebsrad (200) in der Arbeitsposition (212) die Kontaktfläche (118) der Unterschiene (116) berührend auf der Unterschiene (116) angeordnet ist, wobei durch das elastische Element (400) auf das Antriebsrad (200) eine abwärts gerichtete Andruckkraft (216) ausübbar ist oder ausgeübt wird.

2. Längsverstelleinrichtung (110) nach Anspruch 1, wobei
das Antriebsrad (200) in einer Halteeinrichtung (204) gehalten ist und zwischen der Ruheposition (210) und der Arbeitsposition (212) durch eine Steuereinrichtung (300) hin und her bewegbar ist, die zwei drehbar antreibbare, miteinander bewegungsgekoppelte Steuerelemente (302) umfasst, welche eingerichtet sind, auf die Halteeinrichtung (204) anhebend oder absenkend einzuwirken.

3. Längsverstelleinrichtung (110) nach Anspruch 2, wobei
die Steuerelemente (302) jeweils eine auf die Halteeinrichtung (204) einwirkende Steuerkontur (308) aufweisen.

4. Längsverstelleinrichtung (110) nach Anspruch 3, wobei
die Halteeinrichtung (204) Anschlagelemente (208) aufweist und die Steuerkonturen (308) der Steuerelemente (302) auf die Anschlagelemente (208) einwirken.

5. Längsverstelleinrichtung (110) nach einem der Ansprüche 2 bis 4, wobei
die Steuerelemente (302) jeweils ein exzentrisch angeordnetes Krafteinleitungselement (310) aufweisen und das elastische Element (400) auf die Krafteinleitungselemente (310) einwirkend und eine horizontale Kraft (406) auf die Steuerelemente (302) ausübend angeordnet ist.

6. Längsverstelleinrichtung (110) nach einem der Ansprüche 1 bis 5, wobei
das elastische Element (400) im montierten Zustand permanent vorgespannt ist.

7. Längsverstelleinrichtung (110) nach einem der Ansprüche 1 bis 5, wobei
das elastische Element (400) als eine Schenkelfeder (408) oder eine Blattfeder (402) ausgebildet ist.

8. Fahrzeugsitz (100) mit einer Längsverstelleinrichtung (110) nach einem der vorhergehenden Ansprüche.
